# EUROPEAN PATENT SPECIFICATION

(11) **EP 2 585 712 B1**
(45) Date of publication and mention of the grant of the patent: **17.09.2014**
(21) Application number: 11730778.5
(22) Date of filing: 28.06.2011
(51) Int. Cl.: B66C 13/08, B66C 23/18, B66C 23/58, B66C 17/00, E02D 27/42, F03D 1/00, B66C 23/00, E02B 17/00

(54) **LIFTING DEVICE AND METHOD FOR POSITIONING OF A UNWIELDY OBJECT**
HEBEVORRICHTUNG UND VERFAHREN ZUM POSITIONIEREN EINES SPERRIGEN OBJECTS
DISPOSITIF DE LEVAGE ET PROCÉDÉ POUR LE POSITIONNEMENT D'UN OBJET ENCOMBRANT

(30) Priority: 28.06.2010 NL 2004987
(43) Date of publication of application: 01.05.2013
(73) Proprietor: IHC Holland IE B.V., 3361 EP Sliedrecht (NL)
(72) Inventor: VAN DEN BERG, Kuno Johannes Alexander, NL-3015 ED Rotterdam (NL)
(74) Representative: Nederlandsch Octrooibureau
(86) International application number: PCT/NL2011/050467
(87) International publication number: WO 2012/002809

(56) References cited:
- WO-A1-2009/041812
- AU-A1- 2008 317 693
- CA-A1- 2 492 353
- DE-A1-102008 053 404

## Description

### TECHNICAL FIELD OF THE INVENTION

The invention relates to a lifting device for positioning an unwieldy object in such a way that said object can be attached to a tall structure wherein the lifting device does not come into contact with the tall structure. In particular, the invention relates to a lifting device for lifting and positioning a wind turbine blade in such a manner that the latter can be attached to a hub which is situated on a nacelle at the top of a wind turbine tower.

### BACKGROUND OF THE INVENTION

A device and method for handling, positioning and mounting a wind turbine blade to a drive shaft is known from EP1925583. In the known device, a wind turbine blade is positioned horizontally or vertically with respect to the drive shaft. The wind turbine blade is suspended in a frame which in turn is suspended on cables of a lifting device. The use of cables affects the installation in case of wind.

International application WO200941812 describes a method in which the wind turbine blades are attached to the nacelle with hub first, with the nacelle resting against a boom structure of a hoisting crane and with the nacelle with wind turbine blades then being placed on the mast by means of the hoisting crane.

### SUMMARY OF THE INVENTION

It is an object of the invention to provide an improved lifting device suitable for lifting and positioning an unwieldy, in particular elongate, object so that the latter can be fitted to a tall vertical structure, more specifically, lifting a wind turbine blade from a substantially horizontal position, positioning the wind turbine blade against the hub of a wind turbine at an arbitrary angle (not necessarily vertically or horizontally). The advantages of the lifting system are that only one crane is required to construct a wind turbine, that wind turbine blades can be fitted at relatively great wind speeds, that the wind turbine blades can be fitted on the hub at any arbitrary angle, with the hub being placed on the mast, and the like.

According to the invention, this object is achieved by a lifting device which has the features of Claim 1. Advantageous embodiments and further embodiments of the invention can be achieved by means of the measures mentioned in the subclaims.

A lifting device according to the invention is configured so that it can autonomously position an unwieldy object in such a manner that said object can be mounted on a tall structure. In the present context, unwieldy means a large, heavy and possibly elongate object, such as for example a wind turbine blade. In the present context, a tall structure is a structure with a minimum installation height of the object of 60 metres above the water surface or the ground surface. In the present context, autonomously means that the lifting device does not require support from the tall structure in order to be able to position the unwieldy object. The lifting device comprises a boom structure with a longitudinal axis and is characterized by the fact that the lifting device is furthermore provided with a positioning device which is displaceably connected to the boom structure, wherein the boom structure is provided with guiding means for guiding the positioning device along the longitudinal axis and wherein the positioning device is provided with a displacement structure cooperating with the guiding means and a mounting structure for detachably mounting the unwieldy object on the positioning device wherein the boom structure and displacement structure of the positioning device form an assembly for the approximate positioning of the mounting structure with respect to the tall structure and wherein the positioning device is furthermore provided with additional means for accurately positioning the object with respect to the tall structure.

The invention is based on the insight that the positioning of an object suspended from cables at great height is affected by wind. The lifting device according to the invention provides a rigid, yet adjustable connection between the object and the boom structure. Positioning is now no longer affected by the swaying of the lifting cables.

In an embodiment, the additional means comprise a rotation part which is configured to rotate the mounting structure about a first rotation axis on the displacement structure. This embodiment has the advantage that the object can be turned about a rotation axis. In the case of a wind turbine blade, this feature makes it possible to mount the blade to the hub irrespective of the angle which the hub makes. Also, it is no longer necessary to turn the hub during mounting of the wind turbine blades.

An advantageous embodiment of the invention is characterized by the fact that the additional means are configured for three-dimensionally displacing the mounting structure with respect to the displacement structure. This feature makes it possible to take the object accurately to the mounting point after having been taken near the mounting point on the tall structure.

An embodiment is characterized by the fact that the positioning device comprises first tilting means for turning the mounting structure about a second rotation axis which is substantially parallel to the longitudinal axis of the boom structure. This provides an additional degree of freedom of movement for accurately positioning the object. This means that the boom structure having a degree of freedom requires less accuracy when being positioned. A further embodiment is characterized by the fact that the positioning device comprises second tilting means for turning the mounting structure about a third rotation axis which is substantially at right angles to the second rotation axis. These features further improve the positioning properties of the lifting system.

An embodiment is characterized by the fact that the positioning device is provided with linear displacement means for the linear displacement of the mounting structure in a direction which is substantially at right angles to the first rotation axis. These features make it possible for the wind turbine blade to be placed against or in the mounting structure via the radius when a wind turbine blade is radially in line with the corresponding mounting structure on a hub.

A further embodiment is characterized by the fact that the lifting device furthermore comprises a stabilizing device which is configured to reduce the swaying of the boom structure and/or mounting structure. This makes it possible to continue to work even under relatively adverse weather conditions.

An embodiment is characterized by the fact that the lifting device is in the form of a vessel, in particular a jack-up platform, the object is a wind turbine blade and the tall structure is a wind turbine tower which is provided with a nacelle comprising a hub.

An aspect of the invention is to provide a new method for handling and mounting wind turbine blades on a hub of a wind turbine. In this case, use is made of a lifting device according to the invention. By using the lifting device according to the invention, a wind turbine blade can be mounted on a hub at any angle. The hub no longer has to be in a predetermined position in order to be able to mount a wind turbine blade. Conversely, the lifting device offers possibilities for a new method for demounting wind turbine blades.

It will be clear that the various aspects mentioned in this patent application can be combined and may each be considered individually for a divisional patent application.

### BRIEF DESCRIPTION OF THE FIGURES

These and other aspects, features and advantages of the invention are explained in more detail by means of the following description with reference to the drawings, in which the same reference numerals denote identical or similar parts, and in which:
FIG. 1 shows a side view with different positions of a lifting device according to the invention;
FIG. 2 shows a first top view of a positioning device according to the invention;
FIG. 3 shows a second top view of the positioning device;
FIG. 4 shows a first side view of the positioning device;
FIG. 5 shows a second side view of the positioning device; and
FIG. 6 shows the installation of a wind turbine blade on a hub.

### DESCRIPTION OF EMBODIMENTS

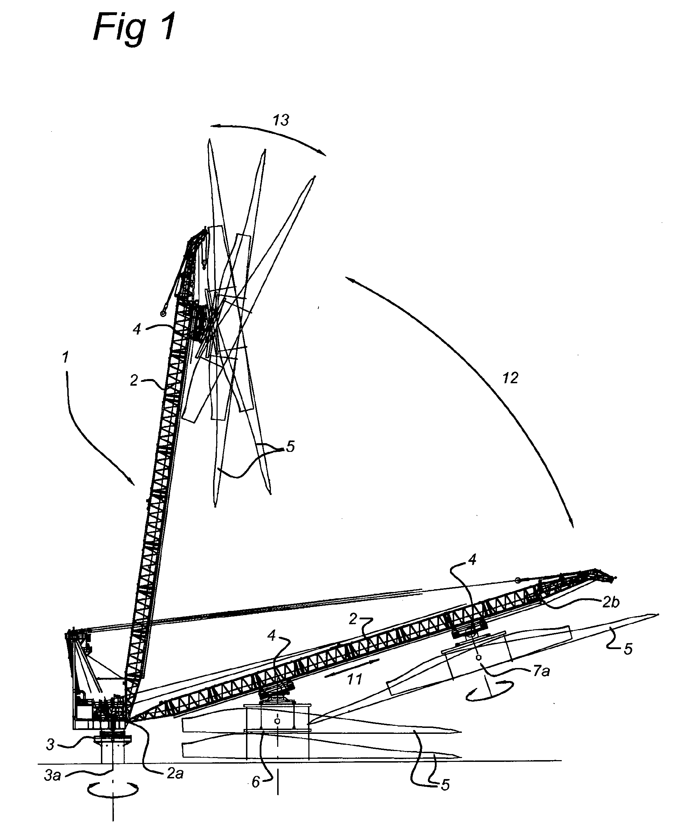

FIG. 1 shows a side view of different positions of a lifting device 1 according to the invention. The lifting device 1 is configured to lift a wind turbine blade 5 and position it with respect to a hub of a wind turbine. A hub is the central part of a wind turbine which is mounted on a drive shaft of a generator which comprises a mounting structure for mounting two or more wind turbine blades. An embodiment of a mounting structure for a wind turbine blade is a flange provided with holes through which bolts of the wind turbine blade are pushed, so that the wind turbine blade can be attached to the hub using nuts.

FIG. 1 illustrates a position in which a wind turbine blade lies on a loading floor, a position in which the wind turbine blade is attached to the lifting device, two positions in which the wind turbine blade is turned 180° about a rotation axis 7a and the boom is in a substantially horizontal position, and positions which illustrate the movability of a wind turbine blade with respect to the lifting device with the wind turbine blade 5 being situated at the top of the lifting device and the boom being peaked up. It should be noted that the boom structure does not have to be in a horizontal position. Since peaking up and peaking down a long boom structure takes time, it is preferable if the object is attached to the boom structure in a position in which the boom structure is as much as possible out of a horizontal position.

The lifting device 1 according to the invention comprises a boom structure 2 of a hoisting crane. The boom structure 2 is attached to a platform 3 which is rotatable about a platform rotation axis 3a. At a fixed end 2a, the boom structure 2 is hingedly connected to the platform 3. The boom structure 2 can be peaked up, i.e. erected, in a known manner around the hinge point, and be peaked down, i.e. lowered. Reference numeral 12 indicates the movement associated with peaking up and peaking down the boom structure 2. During peaking up, the wind turbine blade is tilted. If the longitudinal axis of the wind turbine blade is parallel to the boom structure, the wind turbine blade is taken from a substantially horizontal position to a substantially vertical position.

A positioning device 4 is connected to the boom structure 2 so as to be movable. To this end, the boom structure 2 is provided with guiding means which are configured to guide the positioning device 4 along the boom structure 2 between the fixed end 2a and a free end 2b of the boom structure 2, the direction being substantially parallel to the longitudinal axis of the boom structure 2. The positioning device 4 is provided with guiding means which cooperate with the guiding means of the boom structure 2 in order to move the positioning device 4 along the boom structure 2 and also keep it positioned against the boom structure. In an embodiment, the guiding means of the boom structure 2 is a guide rail and the guiding means of the positioning device 4 is a device provided with wheels which run in/around/over the guide rail. The positioning device 4 can be moved along the boom structure 2 by means of a conventional hoisting means of a hoisting crane, for example the cable with hook. It is also possible for the positioning device to be provided with a motor with a gear wheel and in this case, the guiding means of the boom structure 2 comprise a cogged rail. In this embodiment, the positioning device 4 can be moved along the boom structure 2 independently. The boom structure 2 and the cooperating guiding means of the boom structure 2 and the positioning device 4 together form an assembly for approximately positioning the wind turbine blade 5 with respect to a hub of a wind turbine. They are used to move the wind turbine blade from a storage position to a height near the hub. The positioning device is furthermore configured to accurately position the wind turbine blade near the hub in such a manner that it can be attached to the hub.

In order to displace a wind turbine blade 5 with the lifting device 1, use is made of a supporting frame 6 which is provided with a fixing device (not shown) for fixing the wind turbine blade 5 in the supporting frame 6. After the positioning device 4 has been placed above the supporting frame, the supporting frame is hoisted up by means of winches and then the supporting frame is fixed on a mounting structure of the positioning device 4. The fixing device is preferably remote-controlled and configured in such a manner that it can release the wind turbine blade after the wind turbine blade has been mounted on the hub.

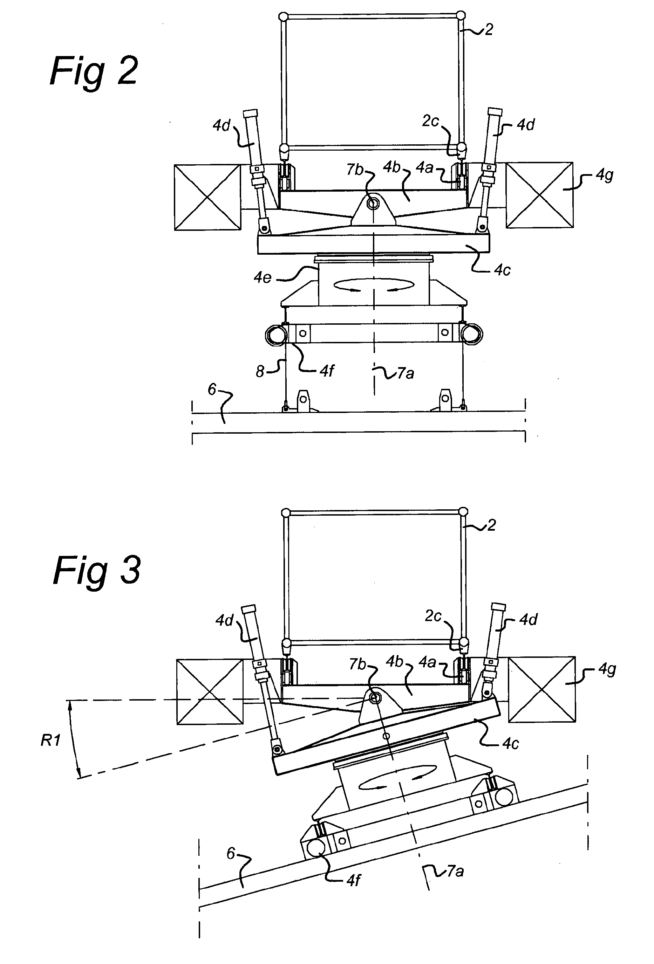

FIGS. 2 - 5 show various views of a positioning device 4 according to the invention. The positioning device 4 will be described in detail with reference to these figures. The boom structure 2 has guiding means 2c in the form of a rail with which the guiding means 4a of the positioning device 4 are in engagement. The guiding means 4a are attached to a first structural part 4b of the positioning device. The positioning device 4 furthermore comprises a second structural part 4c which is hingedly connected to the first structural part 4b about a hinge point 7b. Drive elements 4d, in the form of, for example, hydraulic cylinders, are provided on either side of the hinge point 7b, between the first and second structural part 4b, 4c, and are configured in order to rotate the two structural parts with respect to one another about the hinge point 7b. FIG. 2 shows the situation in which the first structural part 4b extends parallel to the second structural part 4c. In FIG. 3, both parts make an angle R1 with respect to one another. The maximum angle R1 which can be made is preferably in the range from 15 - 30°.

Power supplies 4g, such as batteries, motors, pumps, etc. are provided on the first structural part 4b in order to operate the drive elements 4d. However, it is also possible for all or part of these facilities to be provided at the bottom of the boom structure, in which case hoses and cables are required which run along the boom structure in order to actuate the drive means 4d.

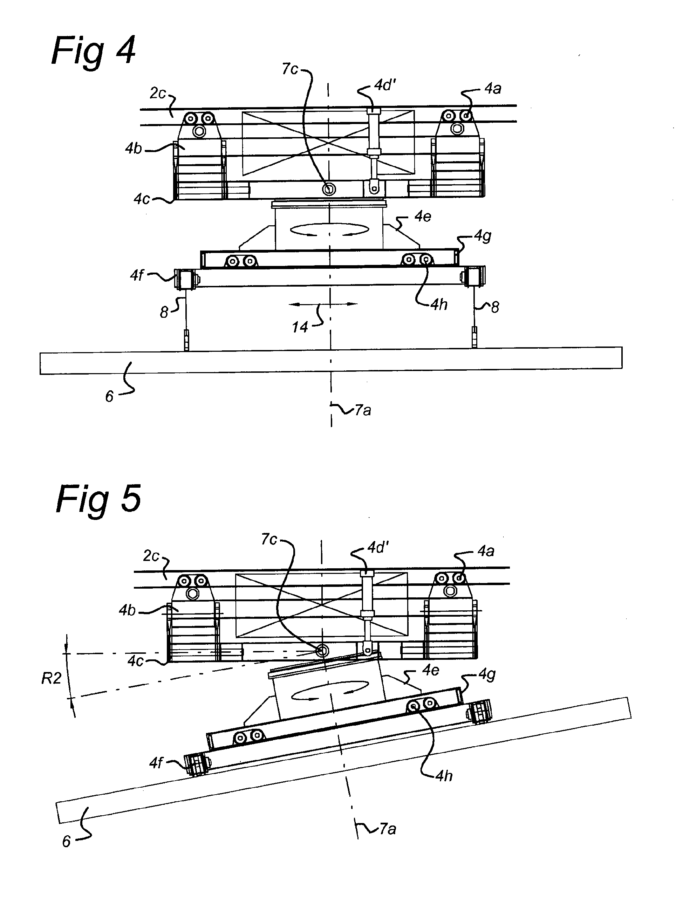

The positioning device 4 furthermore comprises a rotation part 4e which is preferably provided with a bearing. FIGS. 4 and 5, which show a side view of the positioning device 4, illustrate that the rotation part 4e is hingedly connected to the second structural part 4c about hinge point 7c. The rotation axis of hinge point 7c is at right angles to the rotation axis of hinge point 7b. A drive means 4d' in the form of a hydraulic cylinder is arranged between the bearing part 4e and second structural part 4c and is configured to rotate the bearing part 4e with respect to the second structural part 4c about the hinge point 7c. In FIG. 5, the rotation part 4e is at an angle R2 with respect to the second structural part 4c. The maximum angle R2 which can be made is preferably in the range from 15 - 30°. The rotation part 4e has a rotation axis 7a which is at right angles to the rotation axis of hinge point 7c.

The combination of the rotation axes of hinge point 7b, hinge point 7c and the rotation axis of the rotation part 4e makes it possible to place a wind turbine blade at an arbitrary orientation with respect to the boom structure 2.

The positioning device 4 is furthermore provided with a mounting structure 4f. The mounting structure 4f is configured to detachably mount a supporting frame 6 in which a wind turbine blade is fixed. The mounting structure 4f is provided with hoisting means for hoisting the supporting frame 6 against the mounting structure 4f. In this embodiment, the hoisting means are in the form of a winch with cables 8. FIGS. 2 and 4 show views in which the supporting frame 6 is at a distance from the mounting structure 4f and is suspended from cables 8. FIGS. 3 and 5 show views in which the supporting frame is fixed to the mounting structure 4f. If the supporting frame 6 is fixed to the mounting structure 4f, the wind turbine blade can no longer move in an uncontrolled manner with respect to the boom structure 2.

The mounting structure 4f is provided with linear displacement means for linearly displacing the mounting structure 4f in a direction 14 which is at right angles to the rotation axis 7a of the bearing part 4e. The bearing part 4e comprises a guide rail 4g along which wheels 4h of the mounting structure roll. Linear displacement is effected by means of a drive means (not shown), for example in the form of a hydraulic cylinder. The linear displacement means make it possible, once a wind turbine blade has been positioned with respect to the hub, to slide the threaded ends provided at the end of a wind turbine blade into corresponding holes in the flange of the hub, following which nuts are fastened to the threaded ends in order to fix the wind turbine blade on the hub.

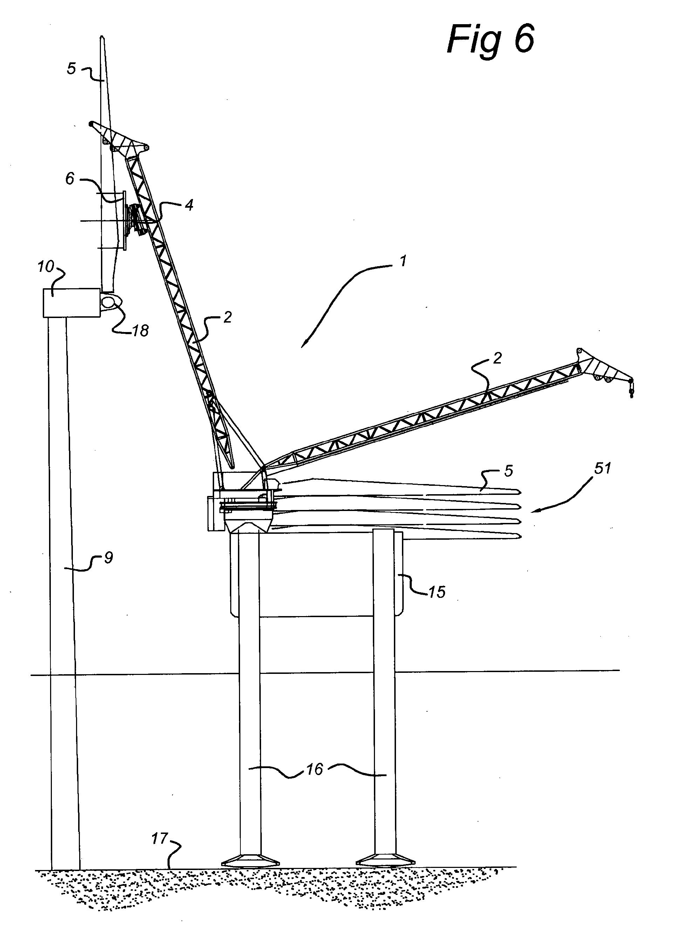

FIG. 6 illustrates the placement of a wind turbine blade on a hub using a device according to the invention. The lifting device is in the form of a jack-up platform or vessel. The lifting device comprises a floating body 15 with a hoisting crane with a boom structure 2 situated thereon. The floating body 15 is secured on the seafloor 17 by means of vertical columns 16, next to a mast 9 on which a nacelle 10 with hub 18 is installed. On the deck of the floating body, a supply 51 of wind turbine blades 5 is present.

A method for positioning a wind turbine blade and mounting the blade on a hub which is situated on a nacelle at the top of a wind turbine tower using the above-described device comprises the following steps:
a) providing at least one horizontal or semi-horizontal wind turbine blade 5;
b) fixing the blade in a supporting frame 6;
c) positioning the boom structure 2 of a lifting device in such a manner that the mounting structure 4f is in line with the supporting frame 6;
d) mounting the supporting frame 6 on the mounting structure 4f, which can be effected by placing the supporting frame 6 against the mounting structure 4f by means of a hoisting device 8 attached to the mounting structure 4f;
e) upwardly tilting 12 the boom structure 2;
f) displacing 11 the positioning device 4 along the boom structure;
g) positioning 7a, 13, 14 the wind turbine blade 5 with respect to a corresponding mounting structure on the hub 18;
h) mounting the wind turbine blade 5 on hub 18; and
i) detaching the supporting frame 6 from the wind turbine blade 5.

In step b), the wind turbine blade has to be fixed in the supporting frame in such a manner that it can be detached from the supporting frame in a simple and remotely controlled manner after it has been placed on the hub. Furthermore, the centre of gravity of the wind turbine blade is preferably inside the contour of the supporting frame in order to minimize the maximum rotation forces in the lifting device, in particular on the positioning device 4.

Steps e) and f) can be carried out in reverse order and together form the approximate positioning of the wind turbine blade 5 with respect to the hub 18. These steps may also comprise turning the platform 3 about rotation axis 3a.

Step g) is the precision positioning of the wind turbine blade 5 with respect to the hub and comprises at least one of the following substeps:
g1) rotating the wind turbine blade about a first rotation axis which corresponds to the rotation axis 7a of the rotation part;
g2) tilting the wind turbine blade about a second rotation axis which corresponds to a rotation about the hinge point 7b between the first structural part 4b and second structural part 4c;
g3) tilting the wind turbine blade about the third rotation axis which corresponds to a rotation about the hinge point 7c between the second structural part 4c and the rotation part 4e.

By making use of rotation about the second and third rotation axes 7b, 7c, it is possible to position the turbine blade at right angles to the rotation axis of the hub. The first rotation axis then makes it possible to position the wind turbine blade 5 radially to the hub and in line with the mounting structure on the hub.

Preferably, the supporting frame 6 is mounted on the mounting structure in step d) in such a way that the displacement direction of the linear displacement means is substantially parallel to a longitudinal axis of the turbine blade 5. In this case, step g) furthermore comprises:
g4) actuating the linear displacement means in order to push the wind turbine blade in the radial direction around or in a mounting structure on the hub.

In the described embodiment of the positioning device 4, two hinging structures are provided in order to form the hinge points 7b and 7c. In another embodiment, the connection between the first structural part 4b and second structural part 4c comprises three or more linear drive means, such as hydraulic cylinders 4d. In this embodiment, the rotation part 4e is also fixed on the second structural part 4c. By means of this movable coupling structure, it is possible to perform the same movements as with the two hinging structures. An additional advantage of this coupling structure is the fact that, in addition to rotary movements, it also allows a translational movement, as a result of which the distance between the boom structure 2 and the mounting structure 4f can be varied without changing their orientation with respect to one another. However, this makes different demands on the linear drive means, as they can now be loaded in a direction at right angles to the linear displacement direction of the drive means.

The above-described lifting device can be used on both land and sea. The lifting device may be in the form of a mobile crane or a crane on a vessel which may or may not be autonomously driven. Thus, the lifting device may be in the form of a jack-up platform. The boom structure 2 is part of a hoisting crane which is, for example, 100 metres tall and suitable for hoisting weights in the range from 800 - 1000 tons. A further advantage of the lifting device is the fact that all parts of a wind turbine, that is to say mast or tower, nacelle, generator, hub and wind turbine blades can be positioned using the same boom structure. At the same time, the lifting device can be used for demounting the blades of the hub at any arbitrary angle of the wind turbine blades.

It will be clear that it is important that the wind turbine blade is suspended as stably as possible so as to position and mount a wind turbine blade. A boom structure 2 tends to sway at high wind speeds. In order to reduce this swaying movement, the device may furthermore be provided with a stabilizing device. The stabilizing device may comprise sensors which measure the swaying of the boom structure and/or the mounting structure of the positioning device. On the basis of the resulting sensor signals, drive elements of the positioning device can be actuated in order to reduce the swaying of the mounting structure from which the object is suspended. The less the swaying, the longer work can be continued.

The above-described measures for embodying a lifting device according to the invention can, of course, be applied separately or parallel or in a different combination or further measures may, if desired, be added, the embodiment will in this case substantially depend on the area of application of the lifting device. The invention is not limited to the illustrated embodiments and modifications thereto can be made without departing from the inventive idea.

## Claims

1. Lifting device configured to autonomously position an unwieldy object in such a manner that said object can be mounted on a tall structure, wherein the lifting device (1) comprises a boom structure (2) with a longitudinal axis, **characterized in that** the lifting device is furthermore provided with a positioning device (4) which is displaceably connected to the boom structure, wherein the boom structure is provided with guiding means (2c) for guiding the positioning device along the longitudinal axis and wherein the positioning device is provided with a displacement structure (4a) cooperating with the guiding means (2c) and a mounting structure (4f) for detachably mounting the unwieldy object on the positioning device wherein the boom structure (2) and displacement structure (4a) of the positioning device (4) form an assembly for the approximate positioning of the mounting structure (4f) with respect to the tall structure and wherein the positioning device (4) is furthermore provided with additional means (4d, 4e) for accurately positioning the object with respect to the tall structure.

2. Lifting device according to Claim 1, **characterized in that** the additional means comprise a rotation part (4e) for rotating the mounting structure (4f) about a first rotation axis (7a) on the displacement structure (4).

3. Lifting device according to Claim 2, **characterized in that** the additional means are configured for three-dimensionally displacing the mounting structure (4f) with respect to the displacement structure (4a).

4. Lifting device according to Claims 2 or 3, **characterized in that** the additional means comprise first tilting means for turning the mounting structure about a second rotation axis (7b) which is substantially parallel to the longitudinal axis of the boom structure.

5. Lifting device according to Claim 4, **characterized in that** the additional means comprise second tilting means for turning the mounting structure about a third rotation axis (7c) which is substantially at right angles to the second rotation axis.

6. Lifting device according to one of Claims 2 - 5, **characterized in that** the additional means comprise linear displacement means for the linear displacement of the mounting structure in a direction which is substantially at right angles to the first rotation axis.

7. Lifting device according to one of Claims 2 -6, **characterized in that** the lifting device furthermore comprises a stabilizing device which is configured to reduce the swaying of the object due to swaying of the boom structure.

8. Lifting device according to one of Claims 2 - 7, **characterized in that** the lifting device is in the form of a vessel, in particular a jack-up platform.

9. Lifting device according to one of Claims 2 - 8, **characterized in that** the object is a wind turbine blade and the tall structure is a wind turbine tower which is provided with a hub.

10. Method for positioning a wind turbine blade and mounting the blade on a hub which is situated on a nacelle at the top of a wind turbine tower, wherein the method comprises the following steps:
a) providing at least one wind turbine blade and a lifting device according to one of Claims 1- 9;
b) fixing the blade in a supporting frame;
c) positioning the boom structure of a lifting device in such a manner that the mounting structure is in line with the supporting frame;
d) mounting the supporting frame on the mounting structure;
e) upwardly tilting the boom structure;
f) displacing the positioning device along the boom structure;
g) positioning the wind turbine blade with respect to a corresponding mounting structure on the hub;
h) mounting the wind turbine blade on the mounting structure of the hub; and
i) detaching the supporting frame from the wind turbine blade.

11. Method according to Claim 10, **characterized in that** step g) comprises at least one of the following substeps:
g1) rotating the wind turbine blade about the first rotation axis;
g2) tilting the wind turbine blade about the second rotation axis;
g3) tilting the wind turbine blade about the third rotation axis.

12. Method according to Claim 11, **characterized in that** in step d) the supporting frame is mounted on the mounting structure in such a way that the displacement direction of the linear displacement means is substantially parallel to a longitudinal axis of the turbine blade and that step g) furthermore comprises:
g4) actuating the linear displacement means in order to push the wind turbine blade in the radial direction around or in the mounting structure on the hub.

## Patentansprüche

1. Hebevorrichtung, konfiguriert zum autonomen Positionieren eines sperrigen Objekts derart, dass das Objekt an einer hohen Struktur befestigt werden kann, wobei die Hebevorrichtung (1) eine Auslegerstruktur (2) mit einer Längsachse aufweist, **dadurch gekennzeichnet, dass** die Hebevorrichtung außerdem mit einer Positionierungseinrichtung (4), die mit der Auslegerstruktur verschiebbar verbunden ist, versehen ist, wobei die Auslegerstruktur mit einer Führungseinrichtung (2c) zum Führen der Positionierungseinrichtung entlang der Längsachse versehen ist und wobei die Positionierungseinrichtung mit einer Verschiebungsstruktur (4a), die mit der Führungseinrichtung (2c) zusammenwirkt, und einer Befestigungsstruktur (4f) zum entfernbaren Befestigen des sperrigen Objekts an der Positionierungseinrichtung versehen ist, wobei die Auslegerstruktur (2) und die Verschiebungsstruktur (4a) der Positionierungseinrichtung (4) eine Einrichtung zur angenäherten Positionierung der Befestigungsstruktur (4f) in Bezug auf die hohe Struktur bilden und wobei die Positionierungseinrichtung (4) weiter mit einer zusätzlichen Einrichtung (4d, 4e) zur genauen Positionierung des Objekts in Bezug auf die hohe Struktur versehen ist.

2. Hebevorrichtung nach Anspruch 1, **dadurch gekennzeichnet, dass** die zusätzliche Einrichtung einen Drehteil (4e) zum Drehen der Befestigungsstruktur (4f) um eine erste Drehachse (7a) auf der Verschiebungsstruktur (4a) aufweist.

3. Hebevorrichtung nach Anspruch 2, **dadurch gekennzeichnet, dass** die zusätzliche Einrichtung zu einer dreidimensionale Verschiebung der Befestigungsstruktur (4f) in Bezug auf die Verschiebungsstruktur (4a) konfiguriert ist.

4. Hebevorrichtung nach Anspruch 2 oder 3, **dadurch gekennzeichnet, dass** die zusätzliche Einrichtung eine erste Kippeinrichtung zum Drehen der Befestigungsstruktur um eine zweite Drehachse (7b), die im Wesentlichen parallel zur Längsachse zur Auslegerstruktur ist, aufweist.

5. Hebevorrichtung nach Anspruch 4, **dadurch gekennzeichnet, dass** die zusätzliche Einrichtung eine zweite Kippeinrichtung zum Drehen der Befestigungsstruktur um eine dritte Drehachse (7c), die im Wesentlichen im rechten Winkel zur zweiten Drehachse ist, aufweist.

6. Hebevorrichtung nach einem der Ansprüche 2 bis 5, **dadurch gekennzeichnet, dass** die zusätzliche Einrichtung eine Linearverschiebungseinrichtung zur linearen Verschiebung der Befestigungsstruktur in einer Richtung, im Wesentlichen im rechten Winkel zur ersten Drehachse ist, aufweist.

7. Hebevorrichtung nach einem der Ansprüche 2 bis 6, **dadurch gekennzeichnet, dass** die Hebevorrichtung außerdem eine Stabilisierungsvorrichtung, die zum Reduzieren des Schwankens des Objekts aufgrund eines Schwankens der Auslegerstruktur konfiguriert ist, aufweist.

8. Hebevorrichtung nach einem der Ansprüche 2 bis 7, **dadurch gekennzeichnet, dass** die Hebevorrichtung in der Form eines Wasserfahrzeugs, insbesondere einer Hubplattform ist.

9. Hebevorrichtung nach einem der Ansprüche 2 bis 8, **dadurch gekennzeichnet, dass** das Objekt ein Windturbinenblatt ist und die hohe Struktur ein Windturbinenturm ist, der mit einer Nabe versehen ist.

10. Verfahren zur Positionierung eines Windturbinenblatts und Befestigung des Blatts an einer Nabe, die sich an einem Maschinenhaus bzw. einer Gondel an der Spitze eines Windturbinenturms befindet, wobei das Verfahren die folgenden Schritte aufweist:
a) Bereitstellen wenigstens eines Windturbinenblatts und einer Hebevorrichtung nach einem der Ansprüche 1 bis 9,
b) Befestigen des Blatts in einem Halterahmen,
c) Positionieren der Auslegerstruktur einer Hebevorrichtung derart, dass die Befestigungsstruktur zum Halterahmen ausgerichtet ist,
d) Befestigen des Halterahmens an der Befestigungsstruktur,
e) nach oben Kippen der Auslegerstruktur,
f) Verschieben der Positionierungseinrichtung entlang der Auslegerstruktur,
g) Positionieren des Windturbinenblatts in Bezug auf eine korrespondierende Befestigungsstruktur an der Nabe,
h) Befestigen des Windturbinenblatts an der Befestigungsstruktur der Nabe, und
i) Entfernen des Halterahmens

11. Verfahren nach Anspruch 10, **dadurch gekennzeichnet, dass** Schritt g) wenigstens einen der folgenden Schritte aufweist:
g1) Drehen des Windturbinenblatts um die erste Drehachse,
g2) Drehen des Windturbinenblatts um die zweite Drehachse,
g3) Drehen des Windturbinenblatts um die dritte Drehachse.

12. Verfahren nach Anspruch 11, **dadurch gekennzeichnet, dass** beim Schritt d) der Halterahmen an der Befestigungsstruktur derart befestigt wird, dass die Verschiebungsrichtung der Linearverschiebungseinrichtung im Wesentlichen parallel zu einer Längsachse des Turbinenblatts ist, und dass Schritt g) weiter aufweist:
g4) Betätigen der Linearverschiebungseinrichtung, um das Windturbinenblatt in der radialen Richtung um oder in die Befestigungsstruktur an der Nabe zu schieben.

## Revendications

1. Dispositif de levage configuré pour positionner de manière autonome un objet encombrant de manière à ce que ledit objet puisse être monté sur une structure de grande hauteur, où le dispositif de levage (1) comprend une structure de flèche (2) avec un axe longitudinal, **caractérisé en ce que** le dispositif de levage est en outre muni d'un dispositif de positionnement (4) qui est relié à la structure de flèche de manière à pouvoir se déplacer, où la structure de flèche est munie de moyens de guidage (2c) pour guider le dispositif de positionnement le long de l'axe longitudinal et où le dispositif de positionnement est muni d'une structure de déplacement (4a) coopérant avec les moyens de guidage (2c) et d'une structure de montage (4f) pour monter de manière amovible l'objet encombrant sur le dispositif de positionnement où la structure de flèche (2) et la structure de déplacement (4a) du dispositif de positionnement (4) forment un ensemble pour le positionnement approximatif de la structure de montage (4f) par rapport à la structure de grande hauteur et où le dispositif de positionnement (4) est en outre muni de moyens supplémentaires (4d, 4e) pour positionner avec précision l'objet par rapport à la structure de grande hauteur.

2. Dispositif de levage selon la revendication 1, **caractérisé en ce que** les moyens supplémentaires comprennent une partie de rotation (4e) pour mettre en rotation la structure de montage (4f) autour d'un premier axe de rotation (7a) sur la structure de déplacement (4).

3. Dispositif de levage selon la revendication 2, **caractérisé en ce que** les moyens supplémentaires sont configurés pour déplacer de manière tridimensionnelle la structure de montage (4f) par rapport à la structure de déplacement (4a).

4. Dispositif de levage selon les revendications 2 ou 3, **caractérisé en ce que** les moyens supplémentaires comprennent un premier moyen d'inclinaison pour faire tourner la structure de montage autour d'un deuxième axe de rotation (7b) qui est essentiellement parallèle à l'axe longitudinal de la structure de la flèche.

5. Dispositif de levage selon la revendication 4, **caractérisé en ce que** les moyens supplémentaires comprennent un deuxième moyen d'inclinaison pour faire tourner la structure de montage autour d'un troisième axe de rotation (7c) qui est essentiellement à angle droit par rapport au deuxième axe de rotation.

6. Dispositif de levage selon l'une des revendications 2 à 5, **caractérisé en ce que** les moyens supplémentaires comprennent des moyens de déplacement linéaire pour le déplacement linéaire de la structure de montage dans une direction qui est essentiellement à angle droit par rapport au premier axe de rotation.

7. Dispositif de levage selon l'une des revendications 2 à 6, **caractérisé en ce que** le dispositif de levage comprend en outre un dispositif de stabilisation qui est configuré pour réduire l'oscillation de l'objet sous l'effet de l'oscillation de la structure de flèche.

8. Dispositif de levage selon l'une des revendications 2 à 7, **caractérisé en ce que** le dispositif de levage est sous la forme d'un navire, en particulier une plate-forme autoélévatrice.

9. Dispositif de levage selon l'une des revendications 2 à 8, **caractérisé en ce que** l'objet est une aube de turbine éolienne et la structure de grande hauteur est une tour de turbine éolienne qui est munie d'un moyeu.

10. Procédé pour positionner une aube de turbine éolienne et pour monter l'aube sur un moyeu qui est situé sur une nacelle au sommet d'une tour de turbine éolienne, dans lequel le procédé comprend les étapes suivantes qui consistent à :
a) fournir au moins une aube de turbine éolienne et un dispositif de levage selon l'une des revendications 1 à 9 ;
b) fixer l'aube dans un cadre de support ;
c) positionner la structure de flèche d'un dispositif de levage de manière à ce que la structure de montage soit alignée avec le cadre de support ;
d) monter le cadre de support sur la structure de montage ;
e) incliner la structure de flèche vers le haut ;
f) déplacer le dispositif de positionnement le long de la structure de flèche ;
g) positionner l'aube de turbine éolienne par rapport à une structure de montage correspondante sur le moyeu ;
h) monter l'aube de turbine éolienne sur la structure de montage du moyeu ; et
i) détacher le cadre de support de l'aube de turbine éolienne.

11. Procédé selon la revendication 10, **caractérisé en ce que** l'étape g) comprend au moins l'une des sous-étapes suivantes qui consistent à :
g1) mettre en rotation l'aube de turbine éolienne autour du premier axe de rotation ;
g2) incliner l'aube de turbine éolienne autour du deuxième axe de rotation ;
g3) incliner l'aube de turbine éolienne autour du troisième axe de rotation.

12. Procédé selon la revendication 11, **caractérisé en ce que** dans l'étape d) le cadre de support est monté sur la structure de montage de sorte que la direction de déplacement des moyens de déplacement linéaire soit essentiellement parallèle à un axe longitudinal de l'aube de turbine et **en ce que** l'étape g) comprend en outre le fait :
g4) d'actionner les moyens de déplacement linéaire afin de pousser l'aube de turbine éolienne dans la direction radiale autour de la structure de montage ou dans celle-ci sur le moyeu.
